# EUROPEAN PATENT APPLICATION

(11) **EP 2 961 177 A1**
(43) Date of publication of application: **30.12.2015**
(21) Application number: 15170081.2
(22) Date of filing: 01.06.2015
(51) Int. Cl.: H04N 21/443

(54) **BROADCAST SIGNAL RECEIVING APPARATUS, INFORMATION APPLIANCE DEVICE AND CONTROL METHOD THEREOF**

(30) Priority: 23.06.2014 KR 20140076334
(71) Applicant: Samsung Electronics Co., Ltd, Gyeonggi-do 443-742 (KR)
(72) Inventor: PARK, Chan-Ho, Gyeonggi-do (KR)
(74) Representative: Appleyard Lees

(57) **Abstract**

A broadcast signal receiving apparatus, an information appliance device and a control method thereof are disclosed. The broadcast signal receiving apparatus includes: a communicator configured to connect with a headend and receive a broadcast signal; a signal processor configured to process the broadcast signal; and a controller configured to, in response to the broadcast signal receiving apparatus entering a standby mode, control the communicator to perform an operation of maintaining a connection with the headend based on a preset period, and control the broadcast signal receiving apparatus to switch to a normal mode in response to an external event, while maintaining the connection with the headend. Thus, the connection with the headend is maintained even in the standby mode, and it is thus possible to immediately switch over from the standby mode to the normal mode, thereby decreasing the power consumption and minimizing a user's standby time.

## Description

### BACKGROUND

### Field

Apparatuses and methods consistent with exemplary embodiments relate to a broadcast signal receiving apparatus, an information appliance device and a control method thereof, and more particularly to a broadcast signal receiving apparatus which communicates with an external device including a headend, an information appliance device and a control method thereof.

### Description of the Related Art

A set-top box (STB), a television (TV) or the like broadcast signal receiving apparatus receives a broadcast signal from a headend (e.g., a broadcasting station), and processes the received broadcast signal to display a corresponding image. To this end, the broadcast signal receiving apparatus includes a communicator, for example, a cable modem to communicate with the headend and receive a broadcast signal.

The broadcast signal receiving apparatus may have a plurality of power modes and enter a standby mode (or a standby power mode), in which power supplied to idle elements is shut off to reduce power consumption, if a predetermined time elapses in the state that no operation is performed.

In the related art, when the broadcast signal receiving apparatus is in the standby mode, the communicator is typically disconnected from the headend if there is no response for a predetermined time defined by a protocol of the communicator. To switch from the standby mode to a normal mode and receive a broadcast signal from the headend, the broadcast signal receiving apparatus has to reset the communicator and be registered to the headend.

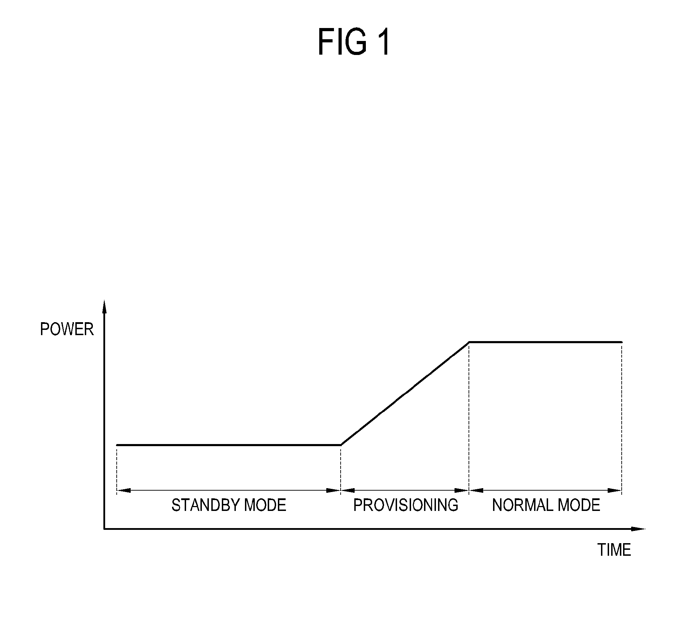

FIG. 1 illustrates a power mode switching process of a broadcast signal receiving apparatus of the related art.

As shown in FIG. 1, the broadcast signal receiving apparatus of the related art undergoes a provisioning process, that is, preparation processes of setting respective elements of the apparatus and registering apparatus information to the headend, in order to switch over to the normal mode from the standby mode of consuming low power.

Typically, it takes 10 to 15 seconds to perform this preparation process. Accordingly, it is inconvenient for a user to be on standby for this considerably long time.

### SUMMARY

Exemplary embodiments address at least the above problems and/or disadvantages and other disadvantages not described above. Also, one or more of the exemplary embodiments are not required to overcome the disadvantages described above, and an exemplary embodiment of the present inventive concept may not overcome any of the problems described above.

According to an aspect of an exemplary embodiment, there is provided a broadcast signal receiving apparatus including: a communicator configured to connect with a headend and receive a broadcast signal; a signal processor configured to process the broadcast signal; and a controller configured to, in response to the broadcast signal receiving apparatus entering a standby mode, control the communicator to perform an operation of maintaining a connection with the headend based on a preset period, and control the broadcast signal receiving apparatus to switch to a normal mode in response to an external event, while maintaining the connection with the headend. Thus, the connection with the headend may be maintained per short period even in the standby mode, and it is thus possible to immediately switch over from the standby mode to the normal mode without a provisioning process, thereby not only decreasing power consumption but also minimizing a user's standby time.

The operation of maintaining the connection with the headend may include an operation of restoring previous settings of the communicator and an operation of transmitting a message to the headend.. Thus, the registration information of the apparatus is not deleted from but may be maintained in the headend.

The controller may be further configured to, in response to the external event occurring, control the broadcast signal receiving apparatus to switch to the normal mode without registering the broadcast signal receiving apparatus in the headend. Thus, it is possible to minimize a standby time of a user.

The preset period may be determined by subtracting a time required for performing the operation of maintaining the connection with the headend from a timeout time defined by a protocol of the communicator. Thus, the communicator may be woken up only for the minimum time needed for maintaining the connection with the headend, and may perform the operation of maintaining the connection, thereby having an effect of decreasing average standby power.

The controller may be further configured to control the communicator to maintain the connection with the headend through one channel among a plurality of communication channels. Thus, the connection may be maintained through one channel excluding wasteful communication channels, thereby decreasing load.

The controller may be further configured to control the broadcast signal receiving apparatus to first switch from the standby mode to a low power mode and then switch from the low power mode to the normal mode in response to the external event, and in the low power mode, elements of the broadcast signal receiving apparatus other than the communicator may be turned off. Thus, the power supplied to unnecessary elements may be restricted, thereby decrease power consumption.

The controller may be further configured to control the communicator to perform the operation of maintaining the connection with the headend in the low power mode. Thus, it is possible to reduce power consumption in the operation of maintaining the connection.

The communicator may include a cable modem, and the broadcast signal receiving apparatus may include a set-top box. Thus, convenience of a user watching broadcasting may be improved.

According to an aspect of another exemplary embodiment, there is provided a method of controlling a broadcast signal receiving apparatus that connects with a headend though a communicator and receives a broadcast signal, the method including: controlling the broadcast signal receiving apparatus to switch to a standby mode; controlling the communicator to perform an operation of maintaining a connection with the headend based on a preset period; controlling, in response to an external event, the broadcast signal receiving apparatus to switch to a normal mode, while the communicator maintains the connection with the headend. Thus, it is possible to immediately switch over from the standby mode to the normal mode without a provisioning process, thereby not only decreasing power consumption but also minimizing a user's standby time.

The Performing the operation of maintaining the connection with the headend may include: restoring previous settings of the communicator; and transmitting a preset message to the headend. Thus, the registration information of the apparatus is not deleted from but may be maintained in the headend.

The controlling the broadcast signal receiving apparatus to switch to the normal mode may include: controlling, in response to the external event occurring, the broadcast signal receiving apparatus to switch to the normal mode without registering the broadcast signal receiving apparatus in the headend. Thus, it is possible to minimize a standby time of a user.

The preset period may be determined by subtracting a time required for performing the operation of maintaining the connection with the headend from a timeout time defined by a protocol of the communicator. Thus, the communicator may be woken up only for the minimum time needed for maintaining the connection with the headend, and may perform the operation of maintaining the connection, thereby having an effect on decreasing average standby power.

The performing the operation of maintaining the connection with the headend may include controlling the communicator to maintain the connection with the headend through one channel among a plurality of communication channels. Thus, the connection may be maintained through one channel excluding wasteful communication channels, thereby decreasing load.

The controlling the broadcast signal receiving apparatus to switch to the normal mode may include controlling the broadcast signal receiving apparatus to first switch from the standby mode to a low power mode and then switch from the low power mode to the normal mode in response to the external event, and in the low power mode, elements of the broadcast signal receiving apparatus other than the communicator may be turned off. Thus, the power supplied to unnecessary elements may be restricted to thereby decrease power consumption.

The operation of maintaining the connection with the headend may be performed in the low power mode.. Thus, it is possible to reduce power consumption in the operation of maintaining the connection.

The method may further include: controlling the broadcast signal receiving apparatus to receive a broadcasting signal from the headend; and processing the received broadcast signal, wherein the communicator may include a cable modem, and the broadcast signal receiving apparatus may include a set-top box. Thus, convenience of a user to watching broadcasting may be improved.

According to an aspect of another exemplary embodiment, there is provided an information appliance device including: a communicator configured to communicate with an external device including a headend; and a controller configured to, in response to the information appliance device entering a standby mode, control the communicator to perform an operation of maintaining a connection with the headend based on a preset period, and control the information appliance device to switch to a normal mode in response to an external event, while maintaining the connection with the headend. Thus, it is possible to immediately switch over from the standby mode to the normal mode without a provisioning process, thereby not only decreasing power consumption but also minimizing a user's standby time.

The operation of maintaining the connection with the headend may include an operation of restoring previous settings of the communicator and an operation of transmitting a message to the headend, and wherein the controller may be further configured to, in response to the external even occurring, control the information appliance device to switch to the normal mode without registering the information appliance device in the headend. Thus, the registration information of the apparatus is not deleted from but may be maintained in the headend, and it is possible to minimize a standby time of a user.

The preset period may be determined by subtracting a time required for performing the operation of maintaining the connection with the headend from a timeout time defined by a protocol of the communicator. Thus, the communicator is woken up only for the minimum time needed for maintaining the connection with the headend, and performs the operation of maintaining the connection, thereby having an effect on decreasing average standby power.

The controller may be further configured to control the communicator to maintain the connection with the headend through one channel among a plurality of communication channels. Thus, the connection may be maintained through one channel excluding wasteful communication channels, thereby decreasing load.

The controller may be further configured to control the information appliance device to first switch from the standby mode to a low power mode and then switch from the low power mode to the normal mode in response to the external event, and wherein, in the low power mode, elements of the information appliance device other than the communicator may be turned off. Thus, the power supplied to unnecessary elements may be restricted to thereby decrease power consumption.

The controller may be further configured to control the communicator to perform the operation of maintaining the connection with the headend in the low power mode. Thus, it is possible to reduce power consumption in the operation of maintaining the connection.

The communicator may include a communication module configured to support wired or wireless interactive communication, and the information appliance device may include at least one of a set-top box, a home appliance, a computer appliance, and an Internet appliance. Thus, it is possible to apply the communicator not only to an apparatus for receiving a broadcast signal but also to various devices including with communication modules supporting interactive communication.

According to an aspect of another exemplary embodiment, there is provided a broadcast signal receiving apparatus including: a communicator configured to connect with a headend and receive a broadcast signal from the headend; and a controller configured to control the broadcasting signal receiving apparatus to operate in one of a normal mode and a standby mode, wherein, when the broadcasting signal receiving apparatus is operating in the standby mode, the controller is further configured to control the communicator to periodically communicate with the headend at a predetermined interval, so as to maintain a connection with the headend.

The predetermined interval may be determined by subtracting a time required for the communication with the headend to maintain the connection with the headend from a timeout time defined by a protocol of the communicator.

The controller may be further configured to, in response to an external event, control the broadcasting signal receiving apparatus to switch to the normal mode.

### BRIEF DESCRIPTION OF THE DRAWINGS

The above and/or other aspects will become apparent and more readily appreciated from the following description of certain exemplary embodiments, taken in conjunction with the accompanying drawings, in which:
FIG. 1 illustrates a power mode switching process of a broadcast signal receiving apparatus of the related art;
FIG. 2 illustrates an example of a broadcast signal receiving apparatus according to an exemplary embodiment;
FIG. 3 is a block diagram of the broadcast signal receiving apparatus according to an exemplary embodiment;
FIG. 4 illustrates a power mode switching process of the broadcast signal receiving apparatus according to an exemplary embodiment; and
FIG. 5 is a flowchart illustrating a control method of the broadcast signal receiving apparatus according to an exemplary embodiment.

### DETAILED DESCRIPTION OF EXEMPLARY EMBODIMENTS

Certain exemplary embodiments will now be described in greater detail with reference to accompanying drawings.

In the following description, the same drawing reference numerals are used for the same elements, even in different drawings. The matters defined in the description, such as the detailed construction and elements, are provided to assist the reader in a comprehensive understanding of the present inventive concept. Accordingly, it should be apparent that the exemplary embodiments of the present inventive concept may be carried out without those specifically defined matters. Also, well-known functions or constructions are not described in detail because they would obscure the invention with unnecessary detail.

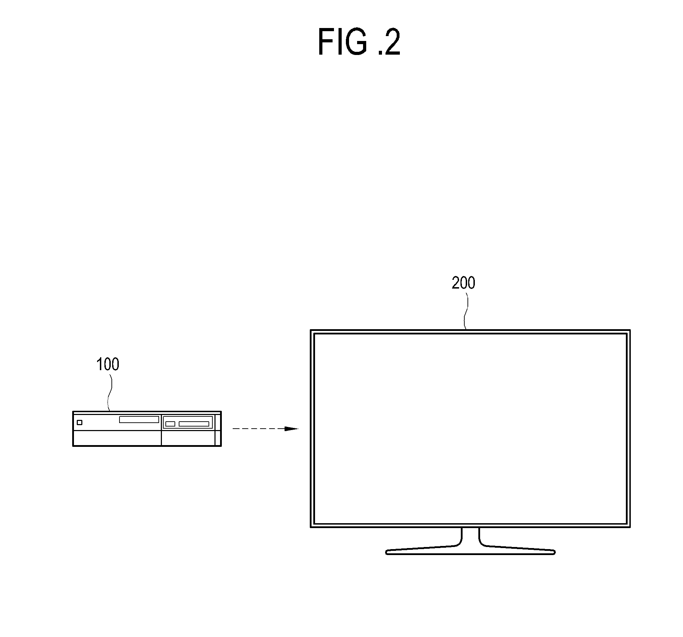

FIG. 2 illustrates an example of a broadcast signal receiving apparatus according to an exemplary embodiment.

As shown in FIG. 2, the broadcast signal receiving apparatus 100 according to an exemplary embodiment may be implemented by a set-top box (STB) that receives and processes a broadcast signal, and outputs a video/audio signal to a display apparatus 200. The display apparatus 200 may be implemented by a television (TV) or the like.

In the exemplary embodiment shown in FIG. 2, the broadcast signal receiving apparatus 100 is implemented by a set-top box that processes a broadcast signal/broadcast information/ broadcast data received from an image source. The image source may be a headend(hereinafter, also referred to as a headend system or a headend center), for example, a broadcasting station. However, the type of image signal processed in the set-top box is not limited to a broadcast signal. For example, the broadcast signal receiving apparatus 100 may process a moving image (i.e., video), a still image, an application, an on-screen display (OSD), a user interface (UI or hereinafter also referred to as a graphic user interface (GUI)), etc., based on a signal/data received from various image sources using a terrestrial wave, a cable, a satellite, etc., to be displayed on the display apparatus 200. Alternatively, the broadcast signal receiving apparatus 100 may be implemented as or included in various TVs that receive/process/display a broadcast signal or the like and includes a display for displaying a corresponding image. Further, the headend according to an exemplary embodiment is not limited to the broadcasting station, and may include any device or station that can transmit and receive information.

The display apparatus 200 may be implemented as or included in various Smart TVs or Internet Protocol TVs. The Smart TV may receive and a broadcast signal and display a corresponding image in real time, and may have a web browsing function so that the image corresponding to the broadcast signal can be displayed in real time and at the same time various contents can be searched and consumed through Internet. To this end, the Smart TV may provide an interface that is convenient for a user to navigate. Further, the Smart TV may include an open software platform in order to provide an interactive service to a user. Therefore, the Smart TV may provide a user with an application that offers various contents, e.g., a predetermined service to a user through the open software platform. Such an application is an application program capable of providing various types of service. For example, the application may include applications for social network service (SNS), finance, news, weather, a map, music, movie, a game, an electronic book, etc.

In the exemplary embodiment shown in FIG. 2, the display apparatus 200 may access Internet through an interactive communication module provided in the broadcast signal receiving apparatus 100. Alternatively, the broadcast signal receiving apparatus 100 may be a monitor or the like connected to a computer.

In the present exemplary embodiment, the broadcast signal receiving apparatus 100 may be implemented as or included in not only the set-top box but also as an information appliance device including a home appliance such as a refrigerator, a washing machine, etc., a computer appliance such as a desktop computer, a laptop computer, etc., and an Internet appliance such as a Smart phone or a Smart pad (or a tablet computer), etc. Accordingly, the broadcast signal receiving apparatus 100 may be implemented as or included in any device that can support a wired or wireless interactive communication module.

In other words, the exemplary embodiments described below are simply examples that may vary depending on the systems, and thus do not limit the scope of the exemplary embodiments.

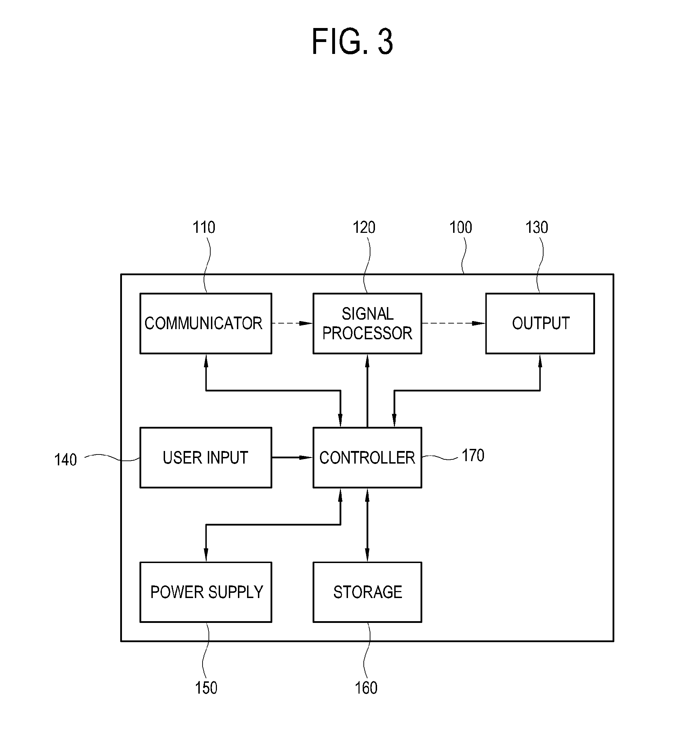

Certain elements of the broadcast signal receiving apparatus will now be described with reference to FIG. 3.

FIG. 3 is a block diagram of the broadcast signal receiving apparatus 100 according to an exemplary embodiment.

As shown in FIG. 3, the broadcast signal receiving apparatus 100 according to an exemplary embodiment includes a communicator 110 which communicates with an external device, e.g., a headend, a signal processor 120 which processes a broadcast signal received from the headend through the communicator 110, an output 130 which outputs the broadcast signal processed by the signal processor 120, a user input 140 which receives a user's input, a power supply 150 which supplies power to the elements of the broadcast signal receiving apparatus 100, a storage 160 which stores various pieces of data, and a controller 170 which controls the broadcast signal receiving apparatus 100.

The communicator 110 may be variously implements corresponding to formats of a received broadcast signal and the types of the broadcast signal receiving apparatus 100.

According to an exemplary embodiment, the communicator 110 includes a communication module supporting wired or wireless communication (e.g., a transceiver). For example, the communicator 110 may include a cable modem connected to a headend such as a broadcasting station, a cable broadcaster, etc., for receiving a broadcast signal, i.e., video/audio/data signals. The communicator 110 may receive audio/video contents, i.e., radio frequency (RF) signals from the headend by a wire or wirelessly. Here, the communicator 110 may include a tuner tuned to a channel for receiving a broadcast signal corresponding to the channel through a terrestrial wave, a cable or a satellite.

In the present exemplary embodiment, the cable modem provided as the communicator 110 supports interactive communication, so that a service provider and the broadcast signal receiving apparatus 100 can exchange information through Internet or the like. For example, if a user uses a video on demand (VOD) service, information about a service charge is transmitted to the service provider through the cable modem under control of the controller 170.

The communicator 110 may be connected to the headend through one among a plurality of channels. For example, in a case of a 8-channel cable modem, one among 8 channels may be assigned to connect with a certain headend.

The communicator 110 may receive an image signal based on composite video, component video, super video, Syndicat des Constructeurs d'Appareils Radiorecepteurs et Téléviseurs (SCART), high definition multimedia interface (HDMI) or the like standards through a wire. Further, an image signal may be received from an external device. For example, an image signal may be received from the external device such as a personal computer (PC), an audio/video (AV) device, a Smart phone, a Smart pad, etc.

In addition, an image signal may be based on data received through Internet or the like network. In this case, the communicator 160 may perform wired or wireless communication. For example, the communicator 110 may support at least one of communication interfaces 1 to N, such as a wired local area network (LAN), Bluetooth, Wi-Fi direct, radio frequency (RF), Zigbee, a wireless LAN, Wi-Fi, infrared communication, ultra wideband (UWB), near field communication (NFC), etc.

Furthermore, an image signal may be based on data stored in a flash memory, a hard disk or the like nonvolatile storage 160. The storage 160 may be internally or externally provided in the broadcast signal receiving apparatus 100. If the storage 160 is externally provided, there may be provided a connector (not shown) to which the storage 160 is connected.

The communicator 110 in the present exemplary embodiment is built-in the main body of the broadcast signal receiving apparatus 100, but may be implemented in the form of a dongle or a module detachably connected to a connector (not shown) of the broadcast signal receiving apparatus 100.

The signal processor 120 may perform various video/audio processing processes previously set with regard to a broadcast signal received through the communicator 110. The signal processor 120 sends an output signal generated or combined by performing the processing processes to the display apparatus 200 through the output 130, so that the display apparatus 200 can display an image and output a sound corresponding to the broadcast signal.

The type of video processing processes performed by the signal processor 120 may for example include decoding corresponding to various image formats, de-interlacing, frame refresh rate conversion, scaling, noise reduction for improving image quality, detail enhancement, line scanning, etc. without limitation. The signal processor 120 may be implemented as an individual group for independently performing each of the processes, or may be implemented as or included in a system-on-chip (SoC) where various functions corresponding to such processes are integrated.

The output 130 outputs the video/audio signals processed by the signal processor 120. In the present exemplary embodiment, the output 130 may be implemented by an A/V output that outputs a video or audio signal processed by the signal processor 120 to the display apparatus 200 connected by a data communication cable such as a D-sub or the like. The A/V output connects with an A/V input of the display apparatus 200 and outputs a video/audio signal.

If the broadcast signal receiving apparatus 100 is implemented as a display apparatus such as a TV, the output 130 may include a display for displaying an image. The display provided in the broadcast signal receiving apparatus 100 or the display apparatus 200 may for example be implemented as liquid crystal, plasma, a light emitting diode (LED), an organic light-emitting diode (OLED), a surface-conduction electron-emitter, a carbon nano-tube (CNT), nano-crystal, or the like various displays, without limitation.

The display may include additional elements in accordance with its respective type. For example, if the display is implemented as the liquid crystal disply, the display includes a liquid crystal display (LCD) panel (not shown), a backlight unit (not shown) for supplying light to the LCD panel, and a panel driver (not shown) for driving the panel (not shown).

In the present exemplary embodiment, the display may include a touch screen for receiving an input corresponding to a user's touch. The touch screen may be a resistive type, a capacitive type, an infrared type or an acoustic wave type touch screen or the like.

The touch screen may display an object (e.g., a menu, a text, an image, a moving image, a figure, an icon and a shortcut icon) including various menu items as a user interface (UI). Thus, a user may touch the object displayed on the touch screen with his/her body (e.g., a finger) or a separate pointing device such as a stylus, thereby performing his/her input.

The touch screen may provide a user with a UI corresponding to various services (e.g., a phone call, data transmission, broadcasting, photographing, a moving image or an application). The touch screen sends the controller 170 a signal (e.g., an analog signal) corresponding to a single or multi touch input corresponding to a selection on the UI.

In the present exemplary embodiment, the touch input includes drag, flick, drag & drop, tap, long tap, etc.

The user input 140 sends various preset control command or limitless information to the controller 170 in response to a user's control and input.

In the present exemplary embodiment, the user input 140 may include a keypad (or an input panel, not shown) with numeral keys, menu keys or the like buttons provided in a main body of the broadcast signal receiving apparatus 100; a remote controller that generates a preset command/data/information/signal for remotely controlling the TV and transmits the same to the broadcast signal receiving apparatus 100 or the display apparatus 200; a keyboard; a mouse; or the like peripheral input device separated from the main body, thereby receiving a user's input. The remote controller may further include a touch sensor for sensing a user's touch and a motion sensor for sensing its own motion caused by a user.

The input device may be an external device capable of wirelessly communicating with the main body of the broadcast signal receiving apparatus 100, and the wireless communication includes Bluetooth, infrared communication, radio frequency (RF) communication, wireless local area network (LAN), Wi-Fi direct, etc. The input device is controlled by a user and thus transmits a preset command to the broadcast signal receiving apparatus 100.

The keypad may include a physical keypad formed in front and/or lateral sides of the broadcast signal receiving apparatus 100, a virtual keypad displayed within the first display 130, and a wirelessly connectable physical keypad. It will be readily appreciated by those skilled in the art that the physical keypad formed in front and/or lateral sides of the broadcast signal receiving apparatus 100 may be excluded in accordance with the performance or structure of the broadcast signal receiving apparatus 100.

The power supply 150 may supply power to elements 110 to 140, 160 and 170 of the broadcast signal receiving apparatus 100 under control of the controller 170. The power supply 150 may convert alternating current (AC) power applied from the exterior into direct current (DC) power, and regulate the DC power according to predetermined levels so as to be supplied to the internal elements 110 to 140, 160 and 170 of the broadcast signal receiving apparatus 100. For example, the power supply 150 may be implemented by a switching mode power supply (SMPS), and may include a power transformer with a transformer circuit or the like to drop DC power into a voltage having a predetermined level corresponding to a rated voltage of each internal element 110 to 140, 160 and 170 of the broadcast signal receiving apparatus 100.

The storage 160 may store data under control of the controller 170. The storage 160 may include a nonvolatile memory, a volatile memory, a flash memory, a hard disk drive (HDD) or a solid state drive (SSD). The storage 160 may be accessed by the controller 170, and perform reading/ recording/ modifying/ deleting/ updating/ and the like with regard to data under control of the controller 170.

The data stored in the storage 160 may, for example, include not only an operating system for driving the broadcast signal receiving apparatus 100, but also various applications, image data, additional data, etc. executable on the operating system of the broadcast signal receiving apparatus 100.

For example, the storage 160 may store a signal or data input/output corresponding to operations of the respective elements 110 to 170 under control of the controller 170. The storage 160 may store a graphic user interface (GUI) related to a control program for controlling the broadcast signal receiving apparatus 100 and an application provided by a manufacturer or downloaded from the outside, images for providing the GUI, user information, a document, a database, or related data.

In the present exemplary embodiment, the storage 160 may further store setting information of the communicator 110 for connecting with the headend, various pieces of specification information defined by a communication protocol supported by the communicator 110, e.g., timeout information, etc. The controller 170 may calculate the time needed for maintaining the connection with the headend, based on the stored information.

According to an exemplary embodiment, the term 'storage' refers to the storage 160, a read only memory (ROM, not shown) in the controller 170, a random access memory (RAM, not shown) or a memory card (not shown, for example, a micro SD card, a memory stick, etc.) mounted to the broadcast signal receiving apparatus 100.

The controller 170 may perform control with regard to various elements of the apparatus 100. For example, the controller 170 proceeds with the video processing process performed by the signal processor 120, and performs control operations corresponding to commands from the user input 140, thereby controlling general operations of the broadcast signal receiving apparatus 100. The controller 170 may be implemented in the form of combining a central processing unit (CPU) with software, chipsets, etc.

The controller 170 may control the general operations of the broadcast signal receiving apparatus 100 and signal flow between internal elements 110 to 160 of the apparatus 100, and process data. The controller 170 may also control power supplied from the power supply 150 to the internal elements 110 to 140, 160 and 170. If a user's input is received or if a set of stored condition is satisfied, the controller 170 may perform control of an operating system (OS) and various applications stored in the storage 160.

The controller 170 may control the communicator 110 to perform interactive communication with the headend, and may, for example, control the communicator 110 to receive a broadcast signal from the headend.

In the present exemplary embodiment, the broadcast signal receiving apparatus 100 has a plurality of power modes (hereinafter also referred to as operating modes). For example, the broadcast signal receiving apparatus 100 may enter a standby mode if a predetermined time elapses without any operations, for example, if no response signal is received for the headend for a predetermined time. In the standby mode, power supplied to idle elements is shut off in order to reduce power consumption of the broadcast signal receiving apparatus 100. Further, conditions for entering the standby mode may be previously set and stored in the storage 160.

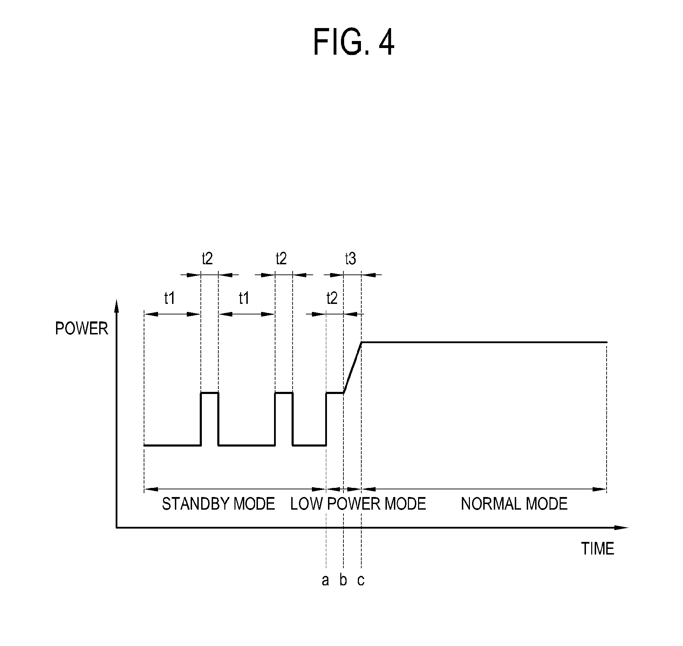

FIG. 4 illustrates a power mode switching process of the broadcast signal receiving apparatus according to an exemplary embodiment.

As shown in FIG. 4, the broadcast signal receiving apparatus 100 in the present exemplary embodiment periodically performs an operation for maintaining connection between the communicator 110 and the headend in response to a preset time t1 elapsing after the broadcast signal receiving apparatus 100 enters the standby mode. That is, the controller 170 of the broadcast signal receiving apparatus 100 may control the communicator 110 to perform the operation for maintaining the connection with the headend in accordance with a preset period t1+t2. For a time t2 during which the connection with the headend is maintained, the broadcast signal receiving apparatus 100 operates as if it is in the normal mode.

To this end, the controller 170 of the broadcast signal receiving apparatus 100 in the present exemplary embodiment controls the power supply 150 to supply power to the communicator 110 in the standby mode. The controller 170 may periodically perform control so as to supply power to, i.e., wake up the communicator 110 based on a time during which the connection of the communicator 110 is maintained.

The controller 170 may calculate a standby mode maintaining time t1 corresponding to the maximum time during which the broadcast signal receiving apparatus 100 can continuously maintain the standby mode without disconnecting from the headend. The calculated standby mode maintaining time t1 corresponds to a time obtained by excluding the time t2 needed for maintaining the connection with the headend from a timeout time Ttimeout defined in specification of a communication protocol used by the communicator 110. That is, t1 = Ttimeout - t2. In the present exemplary embodiment, t1 is 25 seconds, and t2 is 5 seconds.

In a broadcast signal receiving apparatus of the related art that is in the standby mode, the communicator is disconnected from the headend if there is no response for a predetermined time defined by the protocol of the communicator. Therefore, the broadcast signal receiving apparatus of the related art has to undergo the provisioning process of resetting the communicator and re-registering the apparatus to the headend, in order to switch over from the standby mode to the normal mode and receive the broadcast signal again from the headend.

However, the broadcast signal receiving apparatus 100 according to an exemplary embodiment periodically performs the operation of maintaining the connection between the communicator 110 and the headend before the communicator 100 is disconnected from the headend, so that information about the broadcast signal receiving apparatus 100 is not deleted from the headend. The operation of maintaining the connection may include restoring previous settings (or maintaining the settings) of the communicator 110 and transmitting a message to the headend.

Accordingly, since the headend periodically receives a message from the broadcast signal receiving apparatus 100, the registered information of the apparatus 100 is not deleted from the headend and the connection between the apparatus 100 and the headend is continuously maintained.

Further, the standby mode maintaining time t1 is determined based on the timeout time of the corresponding communication protocol and the minimum time needed for performing the operation of maintaining the connection, so that t1 can be maximized and t2 can be minimized, thereby reducing the power consumption and load of the broadcast signal receiving apparatus 100 in the standby mode.

If the communicator 110 supports a plurality of communication channels, the controller 170 controls the communicator 110 to maintain the connection with the headend through one channel among the plurality of communication channels. For example, if the communicator 110 is the 8-channel cable modem, one among 8 communication channels may be assigned for connection with the headend, and the controller 170 controls the communicator 110 to maintain connection with the headend through one assigned channel.

In the present exemplary embodiment of using one channel among the plurality of channels, the communicator 110 performs only the operation of maintaining the connection using the corresponding channel, and for example the time t2 is further decreased, thereby decreasing load and power consumption needed for maintaining the connection.

Further, the controller 170 may control the broadcast signal receiving apparatus 100 to switch over to the normal mode (hereinafter also referred to as a normal operation mode or a general mode) in response to an external event, in the state that the connection with the headend is maintained as described above. The external event may include a user's input operation to the user input 140 of the broadcast signal receiving apparatus 100.

For example, if the external event is received at a point of time a in FIG. 4, the controller 170 performs the operation of maintaining the connection with the headend for a time of t2, and performs another operation for switching over to the normal mode for a time of t3, for example initializing other elements, thereby completing switching over to the normal mode at a point of time c. In the present exemplary embodiment, t3 is a very short time. For example, t3 may be 1 to 3 seconds.

The controller 170 may supply power to elements, to which power is not supplied in the standby mode, for the time of t3, and performs necessary operations. If the communicator 110 maintains the connection with the headend through one among the plurality of communication channels, all the channels except the corresponding channel (for example, 7 channels among 8 channels) may be initialized for the time of t3.

In the present exemplary embodiment, the controller 170 controls the broadcast signal receiving apparatus 100 to switch over to the normal mode without registering the broadcast signal receiving apparatus 110 to the headend when the external event occurs, and completely enters the normal mode within about 5 seconds after the external event occurs. Therefore, the broadcast signal receiving apparatus 110 according to an exemplary embodiment can more quickly switch over to the normal mode than a broadcast signal receiving apparatus of the related art, which requires the provisioning process of about 30 seconds, as shown in FIG. 1.

In the present exemplary embodiment, as shown in FIG. 4, the controller 170 controls the broadcast signal receiving apparatus to primarily switch over from the standby mode to a low power mode (or a power saving mode) and secondarily switch over from the low power mode to the normal mode in response to the external event. In the low power mode, other elements of the broadcast signal receiving apparatus 100 except the communicator 110 may be turned off.

In the present exemplary embodiment, the broadcast signal receiving apparatus 100 may select a power mode switching sequence in consideration of power consumption and mode switching time as shown in the following table (Table 1).

**[Table 1]**

| | | |
|---|---|---|
| Sequence 1 | Normal mode → Standby mode | For low power consumption and short switching time |
| Sequence 2 | Normal mode → Low power mode → Standby mode | For high power consumption and long switching time |

As shown above in Table 1, the broadcast signal receiving apparatus 100 may be set to directly switch over from the normal mode to the standby mode in the case of low power consumption and a short switching time, and may be set to primarily switch over from the normal mode to the low power mode and secondarily switch over from the low power mode to the standby mode in the case of high power consumption and along switching time. A mode switching sequence (e.g., sequence 1 or sequence 2) may be selected by a user, an administrator or the like in advance.

If a condition for entering the standby mode is satisfied, the controller 170 controls the broadcast signal receiving apparatus 100 to switch over to the standby mode in accordance with the preselected selected sequence. Further, the controller 170 controls the communicator 110 to be periodically woken up from the standby mode to perform the operation of maintaining the connection with the headend, and then return to the standby mode.

For example, if the sequence 2 is selected, the controller 170 controls the broadcast signal receiving apparatus 100 to primarily switch over from the normal mode to the low power mode and secondarily switch over from the low power mode to the standby mode. In the low power mode, all the elements of the broadcast signal receiving apparatus 100 except the communicator 110 are turned off. For the time of t2 during which the operation of maintaining the connection with the headend is performed, the broadcast signal receiving apparatus 100 may operate in the low power mode. In the sequence 2 of involving the low power mode, the power is not supplied to unnecessary elements, and therefore the time of t2 is 2 to 3 seconds shorter than that of the sequence 1.

In the standby mode, the controller 170 controls the power mode of the broadcast signal receiving apparatus 100 to switch over in accordance with the selected mode switching sequence in response to the external event. That is, the sequence of switching over from the standby mode to the normal mode corresponds to the previous sequence of switching over to the standby mode.

For example, if the sequence 2 is selected, the broadcast signal receiving apparatus 100 turns off all the unnecessary functions in the low power mode and enables the communicator 110 to do interactive communication with the minimum power consumption. That is, at a point of time b shown in FIG. 4, the communicator 110 maintains the connection with the headend and is thus capable of receiving a broadcast signal from the headend. Thus, the controller 170 can start communication with the headend at the point of time b, and it therefore possible to reduce the time t2, during which a user stands by for the service, to about 3 seconds.

In the foregoing exemplary embodiment additionally disclosing the low power mode, the broadcast signal receiving apparatus 100 operates in the lower power mode for the time t2 during which it is periodically woken up from the standby mode and performs the operation of maintaining the connection with the headend, that is, power is supplied to only some elements such as the communicator 110, thereby decreasing average power consumption.

A method of controlling the broadcast signal receiving apparatus according to an exemplary embodiment will now be described below with reference to accompanying drawings.

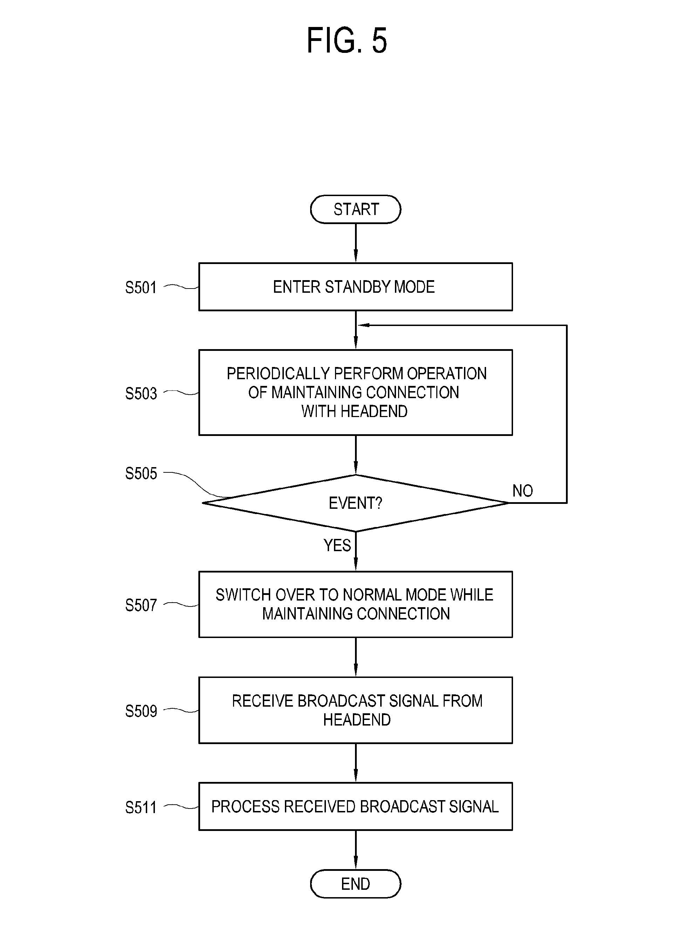

FIG. 5 is a flowchart illustrating a control method of the broadcast signal receiving apparatus according to an exemplary embodiment.

As shown in FIG. 5, at operation S501 the broadcast signal receiving apparatus 100 may enter the standby mode in accordance with preset conditions. In this case, the controller 170 may control the power mode to switch over to the standby mode based on the previously selected sequence of the mode switching sequences shown in Table 1.

At operation S503, the controller 170 periodically performs the operation of maintaining the connection with the headend while the broadcast signal receiving apparatus 100 is in the standby mode. The operation of maintaining the connection may include an operation of restoring the previous settings of the communicator 170, i.e., the settings before entering the standby mode in the operation S501, and an operation of transmitting a predetermined message to the headend. In the operation S503, the period may be determined by the time t1 obtained by subtracting the time t2 needed for performing the operation of maintaining the connection with the headend from the timeout time Ttimeout defined by a communication protocol supported in the communicator 110. Further, if the communicator 110 has a plurality of communication channels, the connection with the headend may be maintained through only one channel among the plurality of channels.

The operation of maintaining the connection in the operation S503 may be performed in accordance with the sequence previously selected in the operation S501. That is, if there is the lower power mode where all the elements but the communicator 110 are turned off, the controller 170 selectively supplies power to only the communicator 110 in the operation S503 like the low power mode, and thus perform the operation of maintaining the connection.

In the state that the broadcast signal receiving apparatus 100 enters the standby mode and periodically performs the operation of maintaining the connection, at operation S505 the controller 170 determines whether the external event occurs. This event may include a user's operation with regard to the user input 140 of the broadcast signal receiving apparatus 100.

If it is determined in the operation S505 that the external event occurs, at operation S507 the controller 170 controls the broadcast signal receiving apparatus 100 to switch over to the normal mode while maintaining the connection with the headend. If it is determined that the external event occurs before the period determined in the operation S501 is expired, the controller 170 performs the operation of maintaining the connection in the operation S503 immediately in response to the occurrence of the external event, and initializes the other elements when the operation of maintaining the connection is completed, thereby controlling the broadcast signal receiving apparatus 100 to switch over to the normal mode. Therefore, at a point of time when the operation of maintaining the connection in the operation S507 is completed, interactive communication is enabled between the communicator 110 and the headend, thereby reducing a user's standby time.

If the operation of maintaining the connection is performed in the operation S507, at operation S509 the broadcast signal receiving apparatus 100 receives a broadcast signal from the headend.

At operation S511, the broadcast signal received in the operation S509 is processed by the signal processor 120. The signal processed in the operation S511, for example, an A/V signal is transmitted to the display apparatus 200 through the output 130, and thus output as an image/a sound through the display apparatus 200.

According to an exemplary embodiment, an apparatus with an interactive communicator can maintain connection with a headend even in the standby mode, and thus intermediately switch over from the standby mode to the normal mode without the provisioning process, thereby decreasing power consumption and minimizing a user's standby time.

Further, the communicator is woken up in only the minimum time needed for maintaining the connection with the headend and performs the operation of maintaining the connection, thereby keeping the registered information of the apparatus in the headend and decreasing average standby power.

The foregoing exemplary embodiments may be recorded on a computer-readable recording medium and may be implemented in computer programs executed using various computer programs. The computer-readable recording medium includes a transmission medium and a storage medium for storing data readable by a computer system. The transmission medium may be implemented by a wired/wireless network where computer systems are connected to one another.

The foregoing exemplary embodiments may be implemented by hardware and combination of hardware and software. The hardware includes the controller 170, and the controller 170 includes a nonvolatile memory where the software, i.e., a computer program is stored; a random access memory (RAM) to which the computer program stored in the nonvolatile memory is loaded; and a central processing unit (CPU), circuitry, a processor, a microprocessor, etc., for executing the computer program loaded to the RAM. The nonvolatile memory may include a hard disk drive, a flash memory, a read only memory (ROM), compact disc (CD)-ROMs, magnetic tapes, a floppy disk, an optical storage, a data transmission device using Internet, etc., but not limited thereto. The nonvolatile memory is simply an example of the computer-readable recording medium in which a program readable by a computer is recorded.

The computer program is a code that can be read and executed by the CPU, and includes codes for enabling the controller 170 to perform operations including the operations S501 to S511 as shown in FIG. 5.

The computer program may be involved in software including an operating system or applications provided in the broadcast signal receiving apparatus 100 and/or software interfacing with the external apparatus.

Although a few exemplary embodiments have been shown and described, it will be appreciated by those skilled in the art that changes may be made in one or more of these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast signal receiving apparatus comprising:
a communicator configured to connect with a headend and receive a broadcast signal;
a signal processor configured to process the broadcast signal; and
a controller configured to control the communicator to perform an operation of maintaining connection with the headend in accordance with a preset period if the broadcast signal receiving apparatus enters a standby mode, and control the broadcast signal receiving apparatus to switch over to a normal mode in response to an external event while maintaining the connection with the headend.

2. The broadcast signal receiving apparatus according to claim 1, wherein the operation of maintaining the connection with the headend comprises an operation of restoring previous settings of the communicator and an operation of transmitting a message to the headend.

3. The broadcast signal receiving apparatus according to claim 1, wherein the controller controls the broadcast signal receiving apparatus to switch over to the normal mode without registering the broadcast signal receiving apparatus in the headend when the external event occurs.

4. The broadcast signal receiving apparatus according to claim 1, wherein the preset period is determined by subtracting a time needed for performing the operation of maintaining the connection with the headend from a timeout time defined by a protocol of the communicator.

5. The broadcast signal receiving apparatus according to claim 1, wherein the controller controls the communicator to maintain the connection with the headend through one channel among a plurality of communication channels.

6. The broadcast signal receiving apparatus according to any one of claims 1 to 5, wherein the controller controls the broadcast signal receiving apparatus to first switch over from the standby mode to a low power mode and then switch over from the low power mode to the normal mode in response to the external event, and
elements of the broadcast signal receiving apparatus other than the communicator are turned off in the low power mode.

7. The broadcast signal receiving apparatus according to claim 6, wherein the controller controls the communicator to perform the operation of maintaining the connection with the headend in the low power mode.

8. The broadcast signal receiving apparatus according to any one of claims 1 to 5, wherein the communicator comprises a cable modem, and the broadcast signal receiving apparatus comprises a set-top box.

9. A method of controlling a broadcast signal receiving apparatus that connects with a headend though a communicator and receives a broadcast signal, the method comprising:
controlling the broadcast signal receiving apparatus to switch over to a standby mode;
controlling the communicator to perform an operation of maintaining connection with the headend in accordance with a preset period;
controlling the broadcast signal receiving apparatus to switch over to a normal mode in response to an external event while the communicator maintains the connection with the headend.

10. The method according to claim 9, wherein the performing the operation of maintaining the connection with the headend comprises:
restoring previous settings of the communicator; and
transmitting a preset message to the headend.

11. The method according to claim 9, wherein the controlling the broadcast signal receiving apparatus to switch over to the normal mode comprises: controlling the broadcast signal receiving apparatus to switch over to the normal mode without registering the broadcast signal receiving apparatus in the headend when the external event occurs.

12. The method according to claim 9, wherein the preset period is determined by subtracting a time needed for performing the operation of maintaining the connection with the headend from a timeout time defined by a protocol of the communicator.

13. The method according to claim 9, wherein the performing the operation of maintaining the connection with the headend comprises: controlling the communicator to maintain the connection with the headend through one channel among a plurality of communication channels.

14. The method according to any one of claims 4 to 13, wherein the controlling the broadcast signal receiving apparatus to switch over to the normal mode comprises: controlling the broadcast signal receiving apparatus to first switch over from the standby mode to a low power mode and then switch over from the low power mode to the normal mode in response to the external event, and
elements of the broadcast signal receiving apparatus other than the communicator are turned off in the low power mode,
wherein the operation of maintaining the connection with the headend is performed in the low power mode.

15. The method according to any one of claims 9 to 13, further comprising:
controlling the broadcast signal receiving apparatus to receive a broadcasting signal from the headend; and
processing the received broadcast signal,
wherein the communicator comprises a cable modem, and the broadcast signal receiving apparatus comprises a set-top box.
